# EUROPEAN PATENT APPLICATION

(11) **EP 0 887 718 A1**
(43) Date of publication of application: **30.12.1998**
(21) Application number: 98109942.7
(22) Date of filing: 30.05.1998
(51) Int. Cl.: G05B 19/042, F23N 5/20

(54) **Fail-safe option select sensing method**

(30) Priority: 27.06.1997 US 884539
(71) Applicant: HONEYWELL INC., Minneapolis Minnesota 55408 (US)
(72) Inventor: Strand, Rolf L., Crystal, MN 55422 (US)
(74) Representative: Herzbach, Dieter, Dipl.-Ing.

(57) **Abstract**

A method and apparatus for providing an option select signal to a microcontroller programmed to provide any of a plurality of control modes depending on which of a plurality of unique option select signals is detected on an option select pin. The option select signal is a composite of a default signal and an option signal which, if present, overrides the default signal. The microcontroller determines the control mode by comparing the signal on the option select pin with a reference signal which may be supplied to a reference signal pin or generated internally.

## Description

### BACKGROUND OF THE INVENTION

This invention relates generally to the field of furnace controls, and more specifically to the field of furnace controls having added reliability and safety.

Modem furnace control systems frequently use microcontrollers to handle a number of complicated gas control and safety functions. In many instances, the ability to select among a number of options for the system controlled by the microcontroller is a desired characteristic. One method of providing an option select function is by using a configurable input/output pin on the microcontroller. As an example, a pin serving an option select function may determine the length of time a gas pre-purge blower will remain on. Alternatively, a pin serving an option select function may determine the duration of the trial-time for a pilot flame. While these two examples relate to timers, various other functional characteristics of a controlled system may be modified via a pin serving an option select function.

In the most simple implementations, a static or DC option select signal is used to select between two options. A first DC voltage on an option select pin represents one option, and a second DC voltage on the option select pin represents a second option. Two-state static option select systems have at least two drawbacks. First, the two-state static system limits selection to two options. For example, the two-state system cannot select among three gas pre-purge lengths, or three pilot flame trial-time lengths. To add more options would, in a prior-art system, typically require more than one input pin on the microcontroller. Input pins are typically in short supply and thus the greater functionality provided by a plurality of options is typically sacrificed for more crucial pin functions.

The second drawback to prior art static two-state option select systems is that they are not fail-safe. Any circuit failure which leaves the option select signal in a high or low state will be indistinguishable by the microcontroller from a properly selected option. This result is obviously undesirable, especially in gas furnace control systems where the option select signal may control safety-related options.

To address the need for a fail-safe option select signal, a dynamic signal may be used for one option, and a static signal may be used for a second option. Such a system is described in U.S. Pat. No. 5,026,270 (Adams, et al.) assigned to Honeywell, Inc.

In Adams, et al., a signal on a single option select pin controls a pilot valve trial-time circuit. The trial-time circuit determines the length of time to hold open a gas valve during an ignition attempt. Shorter trial times are obviously safer than longer trial times since there is a shorter period of time during which uncombusted gas may be vented, if ignition does not occur.

The invention described in Adams works by recognizing an alternating current signal, having proper characteristics, on the option select pin as a first option. The first option corresponds to a long trial time. Any other signal on the option select pin signifies a short trial time, which is thought of as the second option. Thus, the only failure which would select the longer, or less-safe, option, would be a signal similar to the alternating current signal representing the first option. It is assumed in Adams, et al. however that random production of the first option signal on the option select pin is unlikely. The circuit in Adams, et al. consequently provides fail-safe operation because the most common failures cause selection of the safest option.

While Adams, et al. addresses the need for a fail-safe option select circuit, Adams, et al. does not teach a system capable of choosing between more than two fail-safe options. A system may be more cost effective if a single furnace control system meets more than one set of customer or government requirements, without requiring reprogramming of the microcontroller. An option select circuit capable of recognizing multiple options is one way to satisfy the need for meeting multiple requirements.

The Applicant's invention now described provides a fail-safe option select circuit which allows selection by the microcontroller among more than two options.

### SUMMARY OF THE INVENTION

The present invention is a method of providing an option select function for a microcontroller, and an apparatus for performing the same. In the method, a default signal and a plurality of unique option signals are supplied. Each of the option signals is associated by the microcontroller with a desired option. The unique option signals may originate from a rectifying means or other device which is connected to a source of alternating electric current. Each unique option signal must be capable of overriding or masking the default signal. The default signal and one of the plurality of option signals are applied to an option select pin of the microcontroller. The microcontroller compares the signal applied to the option select pin with a reference signal or a set of reference characteristics available to the microcontroller. The microcontroller then determines the desired option based on this comparison, or if no unique option signal is detected, the microcontroller selects the default option.

The apparatus of Applicant's invention follows closely the method described above.

### BRIEF DESCRIPTION OF THE DRAWINGS

FIG. 1 is a block diagram of the present invention.

FIG. 2 is a schematic diagram of one embodiment of the present invention.

FIG. 3A depicts the current appearing on the supply terminals of the embodiment shown in FIG. 2.

FIG. 3B depicts the voltage at a first option terminal of the embodiment of FIG. 2.

FIG. 3C depicts the voltage at a second option terminal of the embodiment of FIG. 2.

FIG. 3D depicts the voltage at a third option terminal of the embodiment of FIG. 2.

FIG. 4A shows a flow diagram for the option select function performed by the microcontroller.

FIG 4B is a continuation of the flow diagram for the option select function performed by the microcontroller of FIG. 4A.

### DETAILED DESCRIPTION OF THE PREFERRED EMBODIMENT

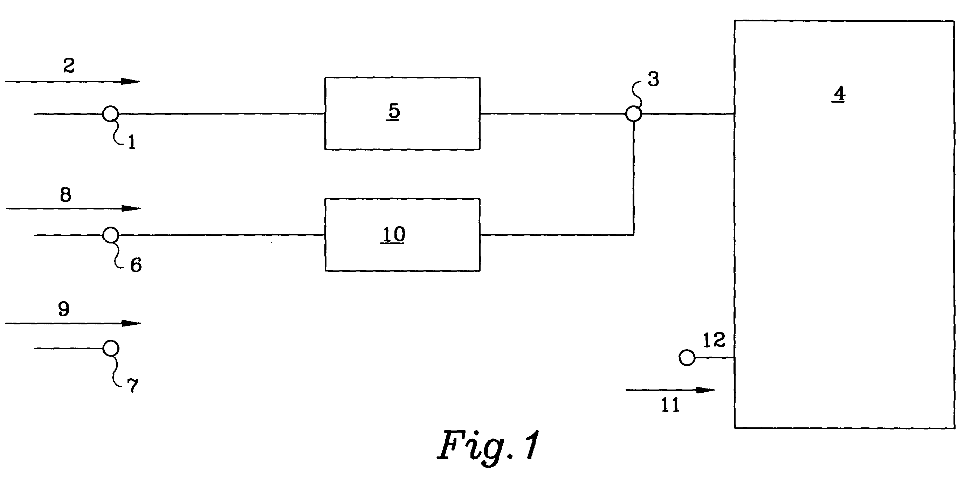

FIG. 1 shows a general block diagram of the present invention. Default terminal 1 receives default signal 2, which preferably has a static or DC value. First connection means 5 electrically connects the default terminal to option select pin 3 of microcontroller 4. Option terminals 6 and 7 receive unique option signals 8 and 9, respectively. Second connection means 10 electrically connects one of the option terminals 6 or 7 to option select pin 3. In the figure, option terminal 6 has been chosen for connection to the option select pin. The microcontroller associates default signal 2 with a default option, and each unique option signal with a unique option. While this general block diagram only shows two option terminals, more than two option terminals may be used. Unique option signals 8 and 9 must have characteristics which allow them to override or mask the default signal. For example, if the default signal is ground potential, any alternating current signal of sufficient magnitude will be capable of overriding or masking the default signal. The unique option signals must be able to override the default signal so that both signals may be supplied to the option select pin concurrently and the microprocessor will select the supplied unique option signal rather than the default option. The purpose of this requirement is to cause the microcontroller to select the default option if, for some reason, no unique option signal is sent to the option select pin. It also allows the default option to be actively chosen, if that is desired, by simply omitting connection means 10.

The microcontroller receives external reference signal 11 on reference signal pin 12 which it can compare with the signal from option select pin 3. Alternatively, the microcontroller may create an internal reference signal or have stored a set of reference characteristics for this purpose. As will be described in detail shortly, the microcontroller uses the result of the comparison between the signals on pins 3 and 12, or the internally created reference signal to determine the desired option. A default option is chosen if the microcontroller's comparison fails.

In operation, default signal 2 combines with the option signal from selected option terminal 6 or 7. If the default signal is at ground potential, under normal operation, the signal which appears on option select pin 3 will be the signal from the selected option terminal. If the default signal is not ground, a combined signal appears on the option select pin.

The signal appearing on the option select pin will thus pass from the option select pin into the microcontroller, which will subsequently serve as the option selection mechanism. The microprocessor typically will sample the option signal on the option select pin and the reference signal on the reference signal pin for a sampling period to produce option signal samples and reference signal samples, respectively. Analog systems may, however, also be possible. When sampling is done, the sampling may take place for less than the period of the reference signal or over many periods.

Phase information for the reference and option signals is crucial where some unique option signals are identical except for a phase difference. An interrupt may be used to start the sampling period and would provide a convenient way of retaining phase differences between the signal on the reference signal pin and the signal on the option select pin. Any common method of implementing an interrupt in a microcontroller known in the art would be suitable here.

There are several methods to determine the desired option from the reference signal and option signal samples. In a first method, each sample from the option select pin is compared to each sample from the reference pin. An interrupt is used to ensure the samples from the reference signal are compared to the samples from the option signal which are contemporaneous or from the same instant. The comparison itself may be accomplished with simple logic in the microcontroller and can be done using either hardware or software. The comparison may, for example, be a simple AND of the reference signal sample and the option signal sample.

The result of the comparison is added to a first counter which keeps a running track or cumulative result of the success or failure of each comparison. After a predetermined period has passed--identified as the sampling period--the value in the first counter is used to determine the desired option by comparing the first counter value with the values which would be produced by each unique option signal. If a match is found, the detected option is selected. Alternatively, sampling of the reference signal and the unique option signal may continue until a certain number of successful or failed comparisons are achieved, which will trigger selection or non-selection of an option.

The length of the sample period is essentially arbitrary except it may not be so short that not all option signals may be resolved from each other. For instance, a sample period shorter than one period of the reference signal would be too short a sample period where some of the option signals differ only in phase. Of course, the longer the sample period, the slower the system will be in selecting an option.

A second method for determining the desired option is to count the transitions of the selected option signal and reference signal from positive to negative or negative to positive during a sampling period. Such changes will be called, and may be referred to in this application as polarity changes. Sampling may be initiated by the microcontroller on its own initiative, or other means. For example, using the reference signal to trigger the start of the sampling period via an interrupt is one good method since it provides phase information. As reference and option signals enter the reference pin and the option pin respectively, each transition made by each signal is stored in a separate counter. When the sampling period is complete, the microprocessor compares the values in these two counters to determine if they are identical. If the sampling period is sufficiently long, the microcontroller may define a match as within a certain number of transitions, rather than requiring an exact match in the number of transitions. This will typically select the desired option, while allowing for disturbances in the circuit, without sacrificing significant fail-safe operation.

A third method which may be used to determine the proper option, counts successful comparisons between the option signal and the reference signal, as well as polarity changes during the sampling period. In this method, use of an interrupt allows selection among option signals which will differ only in phase. For example, signals which are one-half rectified sine waves and only have a one-half period phase difference can both be used as option signals in the same system. The system may also be thought of as including an option selection mechanism--the signal comparisons--and an option verification mechanism--the polarity changes, since the polarity check in some systems simply double-checks a proper option selected by the option selection mechanism.

When an option is to be detected, the microcontroller waits for a triggering signal from the reference signal pin which is used to create the needed interrupt. Once the triggering signal is received, the microcontroller will begin to sample the signal appearing on the option select pin and the reference signal pin. Each sample from the option select pin is AND'ed to the signal on the reference signal pin. If the result of the AND is true, a first counter is incremented by one. If the result of the comparison is false, the first counter is decremented by one. The comparisons continue for the duration of the sampling period, at which time an option is selected based on the value collected in the first counter.

The overall positive or negative result in the first counter accumulated during the sampling period selects which option, if any, is detected. For each valid option, the microcontroller stores an expected value for the first counter. By matching the actual first counter with these stored counter values, an option may be selected. The microcontroller may require an exact match between the first counter value and the stored value, or may allow some amount of difference between the two while still selecting an option. If no close match is found, a default option is selected which should place the system in the safest possible state.

A second counter stores transitions for the option signal during the sampling period. If an option was resolved with the first counter, the option selection performed using the first counter is verified. If an option was not fully resolved using the first counter, the second counter determines the option. The latter case will occur where two option signals have only a phase difference.

Regarding selection of the reference signal, for each of the above option detection methods, if the default signal is at ground potential, the simple choice for the reference signal may be one of the option signals. For example, if the two option signals are half-wave rectified sine waves, out of phase with each other, either option signal may serve as the reference signal. If the default signal is a non-static or AC signal, and the same option signals as above are used, the reference signal could be the combined signal from one of the half-rectified option signals and the default signal. As discussed earlier, the reference signal may be created internally or externally, as long as it is capable of aiding the microcontroller in resolving between each of the unique option signals which may be applied to the option select pin.

Various types of system failures will thus be detected by all the above methods. Assuming the default signal is again at ground potential, failure of the chosen option terminal in a grounded or floating state will cause direct selection of the default option. If the chosen option terminal fails in a high state, the microcontroller will not recognize a valid option, and will again select the default option. As indicated above, making the default option the safest known state, thus results in a fail-safe circuit design. The circuit, as designed, can also provide an error signal indicating failure of the option select function, while still allowing circuit operation using the default option. For example, if the option terminal fails high, the microcontroller would recognize an improper option, select the default option, and could then indicate that the default selection was due to an option select circuit failure.

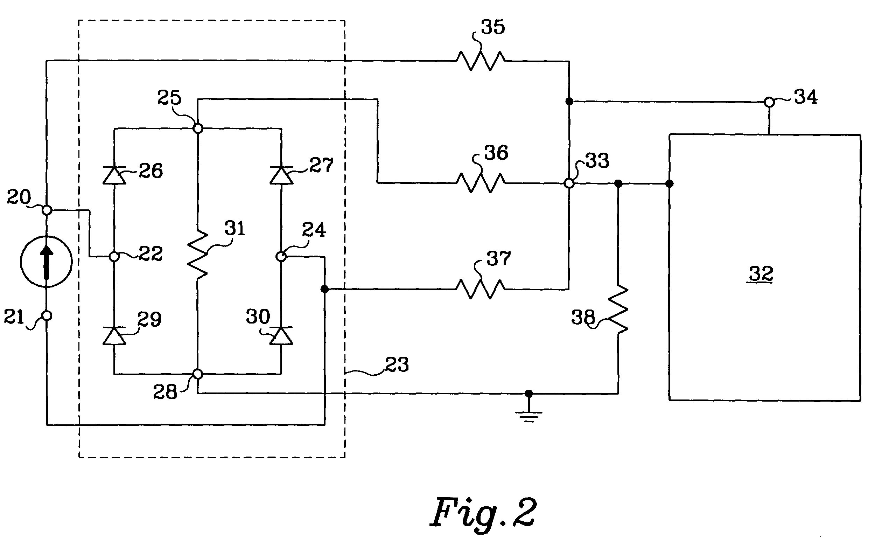

FIG. 2 illustrates a preferred embodiment of the present invention. First supply terminals 20 and second supply terminal 21 receive a supply of alternating electric current therebetween. Positive current flow of the supply is defined to be from terminal 21 toward terminal 20. Terminal 20 is electrically connected to first node 22 of rectifying means 23. Terminal 21 is electrically connected to second node 24 of the rectifying means. Third node 25 is electrically connected to nodes 22 and 24 via first and second diodes, 26 and 27, respectively. Diodes 26 and 27 provide current flow toward node 25. Fourth node 28 is electrically connected to node 22 and 24 via third and fourth diodes 29 and 30 respectively. Diodes 29 and 30 provide current flow away from node 28. Resistor 31 serves as a current path from node 25 to node 28, which is at ground potential.

Microcontroller 32 serves as an option selection mechanism by selecting among a number of options based on signals received on option select pin 33, and reference signal pin 34. Nodes 22, 24 and 25 serve as first, second, and third option terminals, respectively. The option terminals may be called and will be referred to as tapping locations in the rectifying means. During normal operation, nodes 22, 24 and 25 produce unique option signals each of which the microcontroller will associate with a unique option.

One of nodes 22, 24 or 25 electrically connects to option select pin 33 of the microcontroller via an associated resistor. As depicted in FIG. 2, resistors 35, 36, and 37, are associated with nodes 22, 25 and 24, respectively. In this embodiment, node 24 also provides the reference signal to reference signal pin 34 via resistor 37.

Node 28 is electrically connected to the option select pin of the microcontroller via resistor 38, and directly to microcontroller ground. Node 28 represents the default option in this embodiment.

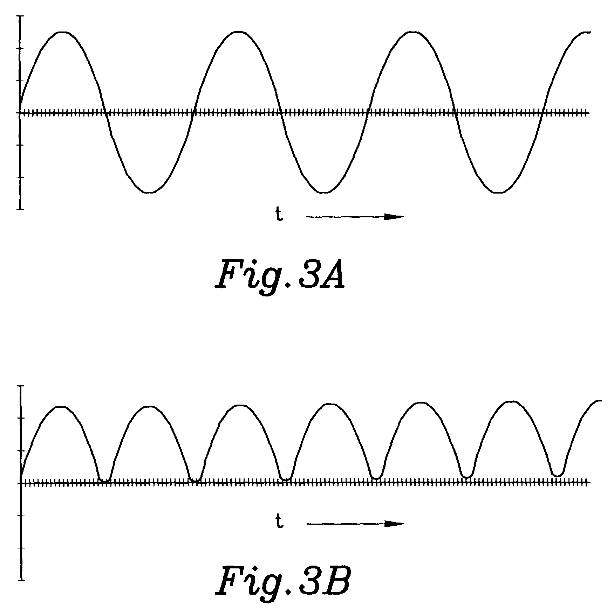

The text below describes the proper operation of the circuit, with reference to the timing schematics of FIGS. 3A through 3D. In each of the timing schematics, the y-axis represents the voltage at the identified node and the x-axis represents time. First and second terminals 20 and 21 receive therebetween a periodic alternating current as shown in FIG. 3A. For these discussions, references to a diode drop refer to the turn-on voltage of the diodes 26, 27, 29 and 30. When the current from terminals 20 to 21 is positive, diode 26 conducts, passing substantially all the current from the supply through resistor 31 to ground. During this time the voltage on node 25 is determined by the value of resistor 31 and the current source. When the current from terminal 20 to 21 is negative, diode 27 conducts, passing substantially all the current from the supply through resistor 31 to ground. During this time, the voltage on node 25 is determined by the value of resistor 31 and the inverse of the current source. FIG. 3B depicts the signal which consequently appears on node 25.

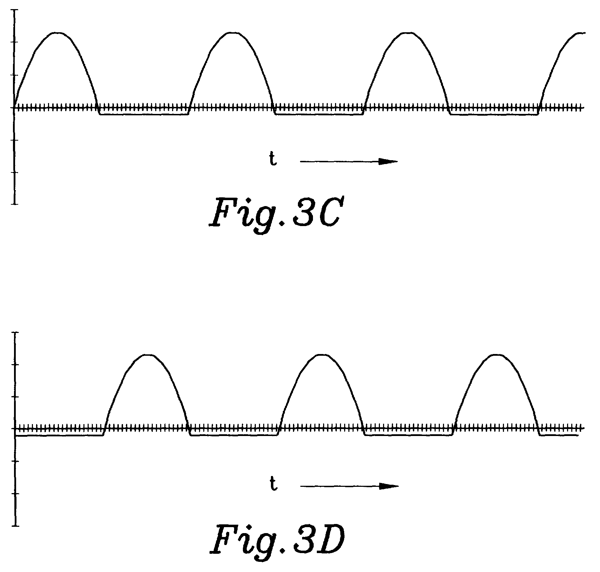

When diode 26 conducts, node 22 will assume a voltage one diode drop above the voltage at node 25. When diode 26 does not conduct, diode 29 conducts, forcing node 22 to one diode drop below ground potential. The resulting signal at node 22 appears in FIG. 3C.

Similarly, when diode 27 conducts, node 24 will assume a voltage one diode drop above the voltage at node 25. When diode 27 does not conduct, diode 30 conducts, forcing node 24 to one diode drop below ground potential. The resulting signal at node 24 appears in FIG. 3D. Ideally, the only difference between the signals on nodes 22 and 24 is a phase difference of one-half period.

During normal operation, the signal from the selected node passes through its associated resistor 35, 36 or 37 to the option select terminal. Similarly, the default signal passes through resistor 38 to the option select terminal. The signal from the selected option terminal and the default signal combine on the option select terminal. The voltage divider formed by the resistor associated with the selected option terminal and resistor 38 modifies the amplitude of this result. Thus, since the default signal is ground in this embodiment, the signal on the option select terminal is the same as the signal on the selected option terminal, reduced by the voltage divider.

Based on the circuit of FIG. 2, there are four valid signals in the preferred embodiment: (1) a first signal at the first option terminal having double the frequency of the reference signal; (2) a second signal at the second option terminal, in-phase signal to the reference signal; and, (3) a third signal at the third option terminal, 180° out-of-phase signal to the reference signal; and (4) a signal at ground potential.

Inside the microcontroller two counters and a flag are used to determine the desired option. A first counter, identified as an option level counter, counts matches between the input signal and the reference signal. The second counter, identified as option transition counter, counts the high to low transitions of the input signal. The flag, identified as the previous option polarity, if it is necessary, saves the polarity of the option signal from the previous sample.

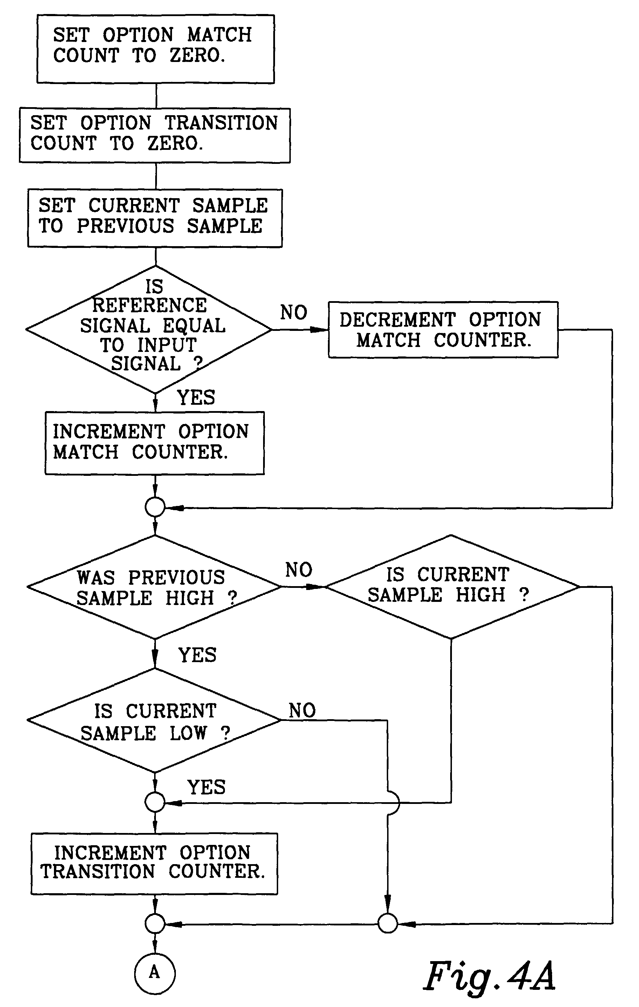

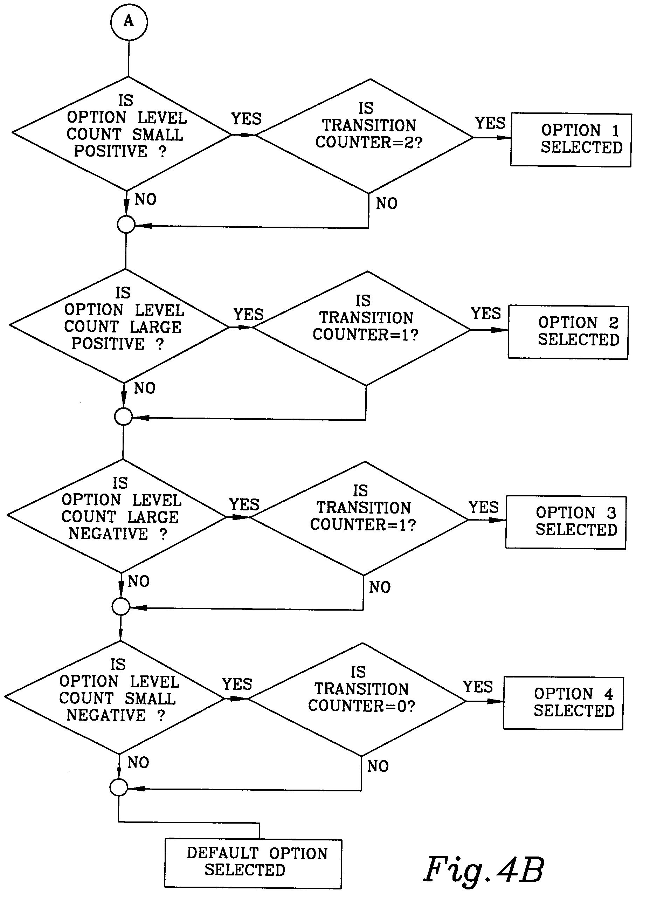

A flow chart of the microcontroller process is shown in FIGs. 4A and 4B. At the beginning of each sampling period, the option match counter and the option transition counter are set to zero. The value of the previous option polarity is either initially set to a default value, or to a valid sample of data from the previous reference signal period. A sample of the reference signal is acquired either shortly after or concurrently with the option signal, and compared to the supplied option signal sample. The result of this comparison either causes a decrement or increment in the option match counter, as this counter represents the number of successful comparisons between the reference signal and the supplied option signal, thus far in the sampling period.

After the option match counter is either incremented or decremented, the stored polarity of the previous sample is compared to the polarity of the current sample. If they are different, the option transition counter is incremented.

At least a half-period of samples of the reference signal are necessary to provide sufficient information for proper selection of an option. More than one-half period of samples may, however, be taken, and will typically provide a more reliable option select result. Less than one-half period may not resolve all option signals.

Once the desired number of samples have been taken, an option signal is calculated using the values in the option match counter and the option transition counter. Valid option signals, that is, those not causing the default option to be selected, include the option states indicated in Table 1:

**Table I**

| Option Detection Table | | |
|---|---|---|
| Option Level Counter Value | Option Transition Counter Value | Resulting Option |
| Small Positive | 2 | 1 |
| Large Positive | 1 | 2 |
| Small Negative | 1 | 3 |
| Large Negative | 0 | 4 |

where small positive, small negative, large positive, and large negative, refer to the number of comparison failures between the reference signal and the input signal during the reference signal period. The physical values representing small and large positive or negative results will, of course, depend on the degree of accuracy desired for the option-select function and the number of samples taken. As indicated earlier. A range of comparison failure is used for each option to allow for circuit fluctuations, without sacrificing the fail-safe characteristic of the circuit.

For an option to be selected, both the number of comparison failures and the transistor counter value must match for the indicated option to be selected. In one sense the transition counter operates as an option verification device for the original option selection function performed by the option level counter.

In accordance with the foregoing description, the Applicant has provided a fail-safe option select mechanism which allows more than two options to be specified and selected. Although a particular embodiment has been shown and described in illustrative purposes, other implementations which do not depart from the applicant's teachings will be apparent to those of ordinary skill in the relevant arts. It is intended that protection not be limited to a disclosed embodiment, but only by the terms of the following claims.

## Claims

1. A method of providing an option select function for a microcontroller (4; 32) via an option select pin (3; 33), comprising:
supplying a default signal which is associated by the microcontroller (4; 32) with a default option;
supplying a plurality of unique option signals, each of the unique option signals associated by the microcontroller (4; 32) a unique option and each of the unique option signals capable of overriding the default signal;
applying the default signal and one of the plurality of unique option signals to the option select pin (3; 33) of the microcontroller (4; 32), the one of the plurality representative of a desired option;
comparing the signal applied to the option select pin (3; 33) of the microcontroller (4; 32) with a reference signal available to the microcontroller (4; 32);
determining the desired option indicated by the comparison of the signal applied to the option select pin (3; 33) of the microcontroller (4; 32) with a reference signal available to the microcontroller (4; 32); and
selecting the default option if no unique option can be determined due to abnormal operation of the circuit.

2. The method of providing an option select function for a microcontroller of claim 1 further comprising:
supplying alternating electric current to a rectifying means (23); and,
tapping the rectifying means (23) at a plurality of nodes (22, 24, 25) within the rectifying means (23), the plurality of nodes (22, 24, 25) capable of supplying the unique option signals.

3. The method of providing an option select function for a microcontroller of claim 2 wherein:
a default terminal (28) supplies the default signal;
a plurality of option terminals (22, 24, 25) supply the plurality of unique option signals;
the default terminal (28) and one of the plurality of option terminals (22, 24, 25) are connected to the option select pin (33) via a plurality of connection means; and
the plurality of connection means are a plurality of resistors (35, 36, 37).

4. The method of providing an option select function for a microcontroller of claim 2 wherein:
the default signal is a ground potential.

5. An apparatus for providing an option select function using a signal supplied to a microcontroller (4; 32), via an option select pin (3; 33) comprising:
a default terminal (1; 28) capable of receiving a default signal which is associated by the microcontroller (4; 32) with a default option;
a plurality of option terminals (6, 7; 22, 24, 25) each of said option terminals (6, 7; 22, 24, 25) capable of receiving a unique option signal which is associated by the microcontroller (4; 32) with a unique option, each of the unique option signals capable of overriding the default signal;
a first connection means (5; 38) connecting said default terminal (1; 28) to the option select pin (3; 33) of the microcontroller (4; 32);
a second connection means (10; 35, 36, 37) connecting one of said plurality of option terminals (6, 7; 22, 24, 25) to the option select pin (3; 33) of the microcontroller, the unique option signal supplied at the option terminal representative of a desired option; and
an option selection mechanism, said option selection apparatus determining the desired option indicated by the comparison of the signal applied to the option select pin of the microcontroller (4; 32) with a reference signal, or selecting the default option if no unique option signal can be determined due to abnormal operation of the circuit.

6. The apparatus for providing an option select function for a microcontroller of claim 5 further comprising:
a first and second terminals (20, 21) capable of receiving an alternating electric current therebetween; and,
a rectifying means (23) for rectifying the alternating electric current received on said first and second terminals, said rectifying means having a plurality of tapping locations (22, 24, 25), each of the tapping locations providing a unique option signal derived from the alternating electric current, the unique option signal capable of being associated by the microcontroller (32) with a unique option.

7. The apparatus for providing an option select function for a microcontroller of claim 5 wherein:
said rectifying means (23) includes a first diode (26), defining a first node (22) and a second node (25) at either end, said first terminal (20) connected to the first node (22), a second diode (27) connected at one end to the second node (25), and defining a third node (24) at the remaining end, said second terminal (21) connected to the third node (24), a third diode (29), connected at one end to the first node (22), and defining a fourth node (28) at the other end, a fourth diode (30), connected at one end to the third node (24) and connected to the fourth node (28) at the other end, the first and second diodes (26, 27) providing current flow toward the second node (25), and the third and fourth diodes (29, 30) providing current flow away from the fourth node (28); and
a current path connects the second and fourth nodes.

8. The apparatus for providing an option select function for a microcontroller of claim 5 wherein
the first node (22) in said rectifying means defines a first option terminal;
the second node (25) in said rectifying means defines a second option terminal;
the third node (24) in said rectifying means defines a third option terminal; and,
the fourth node (28) in said rectifying means defines the default terminal.

9. The apparatus for providing an option select function for a microcontroller of claim 5 wherein said first and second connection (35, 36, 37, 38) means are resistors.

10. The apparatus for providing an option select function for a microcontroller of claim 7 wherein said first tapping location is at ground potential.

11. A method for detecting an option on an option select pin of a microcontroller comprising:
producing one of a plurality of unique option signals, each of the unique option signals indicative of a possible option, the produced option signal indicative of a desired option;
producing a reference signal capable of being used by the microcontroller (4; 32) to distinguish between each one of said plurality of unique option signals;
sampling the one or more produced option signals to produce option signal samples;
sampling the one or more produced reference signals to produce reference signal samples;
comparing contemporaneous option signal samples and reference signal samples for similar magnitude;
storing in a first counter the cumulative result of comparisons between the option signal samples and the reference signal samples for a predetermined sampling period;
comparing the value stored in the first counter to predetermined values which would be produced by each one of said plurality of unique option signals once the predetermined sampling period has elapsed; and,
detecting the desired option based on at least the successful comparison between the cumulative result stored in the first counter and the a value which would be produced by the desired option, or a default option if the comparison is not successful.

12. The method for detecting an option on an option select pin of a microcontroller of claim 11 further comprising the steps of:
storing polarity changes of the produced option signal in a second counter; and
verifying a proper option was selected by comparing the number of polarity changes produced for the produced option signal with a predetermined number of polarity changes identified for the detected option.

13. The method for detecting an option on an option select pin of a microcontroller of claim 12 wherein:
the plurality of unique option signals comprises a first, second and third signals, the second and third signals half-wave rectified signals of the first signal, the second and third signals 180° out of phase.

14. The method for detecting an option on an option select pin of a microcontroller of claim 13 wherein:
one of the second or third signals represents the reference signal; and wherein
the predetermined sampling period during which the produced option signal and reference signal are compared comprises at least one-half cycle of the reference signal.

15. The method for detecting an option on an option select pin of a microcontroller of claim 13 wherein:
the reference signals is used to trigger an interrupt which ensures the reference signal and the produced options signal are contemporaneous.

16. An apparatus for detecting an option on an option select pin (3; 33) of a microcontroller (4; 32) comprising:
a plurality of option terminals (6, 7; 22, 24, 25), each of said option terminals receiving a unique option signal, each unique option signal indicating one of a plurality of unique options;
a reference signal pin (12; 34), said reference signal pin (12; 34) for receiving a reference signal operable to distinguish between each of the plurality of unique option signals;
an option select pin (3; 33) for receiving one of the plurality of unique option signals, the received option signal indicative of a desired option;
option selection means, for comparing the reference signal to the received option signal during a predetermined sending period to determine the desired option, or to select a default option if the comparison fails due to abnormal circuit operation.

17. The apparatus for detecting an option of claim 16 wherein the option selection means is inside the microcontroller and comprises:
sampling apparatus for acquiring contemporaneous samples of the received option signal and the reference signal;
sample comparing apparatus for comparing contemporaneous samples of the received option signal and the reference signal;
first counter for storing a cumulative result of the sample comparing apparatus; and
option selection mechanism for comparing the value in said first counter after the predetermined sampling period has elapsed with the value which would be produced by each of the plurality of unique option signals whereby upon a match between the cumulative result in said first counter and the value which would be produced by the one of the plurality of unique option signals, the detected option is selected, or a default option is selected if the detection fails.

18. The apparatus of claim 17 further comprising:
second counter which stores the number of polarity changes of the received option signal for the predetermined sampling period;
option verification apparatus which compares the value in said second counter with the number of polarity changes associated with the detected option, to verify that a valid option was selected.

19. The apparatus of claim 18 wherein:
one of said plurality of unique option signals also serves as the reference signal; and wherein an interrupt, triggered by the reference signal assures the compared samples are contemporaneous.

20. The apparatus of claim 19 wherein:
the plurality of option signals comprises a first, second and third signals, the second and third signals half-wave rectified signals of the first signal, the second and third signals 180° out of phase; and wherein one of the second or third signals represents the reference signal.
